# EUROPEAN PATENT APPLICATION

(11) **EP 3 430 909 A1**
(43) Date of publication of application: **23.01.2019**
(21) Application number: 16886179.7
(22) Date of filing: 26.04.2016
(51) Int. Cl.: A23C 9/152, A23C 9/154, A23C 9/156, A23F 5/40, A23L 2/52

(54) **RECIPE AND METHOD FOR PRODUCING A BEVERAGE BASED ON COFFEE WITH MILK**

(30) Priority: 21.01.2016 ES 201630069
(71) Applicant: Cafes Candelas S.L., 27003 Lugo (ES)
(72) Inventor: ALONSO MONTERO, Enrique, 27003 Lugo (ES)
(74) Representative: Álvarez Flores, Alberto
(86) International application number: PCT/ES2016/070312
(87) International publication number: WO 2017/125623

(57) **Abstract**

The invention relates to a recipe and a method for producing a beverage based on coffee with milk, with the following ingredients: milk, water, sugar, coffee, stabiliser and acidity regulator. A cocoa-based ingredient can be added.

For every approximately 100 units of weight of the beverage, there are between 50 and 90 units of said standardised milk with a weight content of between 2% and 3% of fat and between 0.5% and 3% of lyophilised coffee.

The milk (1) is collected, it is subjected to thermisation and skimming (2), and is standardised (3) with a weight content of between 2 and 3% of fat. The previously mentioned ingredients are added (4) to the milk. A thermal treatment UHT is then carried out and the mixture is homogenised. Finally, the product obtained is packaged (6) and stored (7).

## Description

### OBJECT OF THE INVENTION

The present invention is within the state of the art of the recipes and methods for producing beverages based on coffee with milk.

### BACKGROUND OF THE INVENTION

Coffee-with-milk flavoured beverages with or without cocoa content are known. For example, beverages with coffee aroma and flavour without caffeine content with previously decaffeinated Brazilian Arabica coffee ingredients and with the following ingredients in weight: 79% milk, 17% Arabica coffee, sugar, stabiliser (E339) and thickener (carrageenans). It is required that this product is kept refrigerated at a maximum temperature of 8°C, what it is a disadvantage that increases storage and transportation costs.

Coffee-with-milk-flavoured beverages with ingredients are also known: fresh milk with *espresso* coffee, and without sugar content. Specifically with 71 grains of Arabica coffee from Brazil harmonised with fresh milk. The ingredients are in the following proportion: 80% partially skimmed milk, 17% Arabica coffee, and the rest constituted by a fructose, stabiliser (sodium phosphate), thickener (carrageenan) and sweetener (sucralose).

The patent US2014010943 describes a powdered milk-based beverage which can incorporate coffee and cocoa, for distribution in beverage-vending machines for the final consumer. The patent document DE102008001985 describes a coffee beverage mixed with a natural or artificial flavouring agent by infusion of the coffee and the flavouring agent.

### DESCRIPTION OF THE INVENTION

The present invention is a novel and simple recipe, and method of preparation, of a beverage based on coffee and milk.

For this, for its preparation, as ingredients are used: previously standardised milk with a content between 2% and 3% by weight of fat (F) (milk with or without lactose can be used), water, sugar or sweetener for lines of low caloric content, soluble coffee, stabiliser and acidity regulator. Additional ingredients such as cocoa or natural extracts based on cocoa, vanilla, cinnamon, etc. may optionally be added.

High quality soluble coffee is preferably used to obtain better coffee concentrations in the final product and to allow a simpler and more efficient obtaining process of final product compared to the use of infused coffee.

As for the method or process for obtaining the beverage object of the present invention, it has the following steps:
- Collection of milk
- Thermisation and skimming of milk in a temperature range of 72°C to 76°C, for 15 to 20 seconds
- Standardisation of fat content up to 2% to 3% in fat content
- Optionally an enzymatic hydrolysis of the milk can be carried out until its lactose content is removed (to obtain an alternative of the final product "without lactose")
- Addition of ingredients: water, sugar, soluble coffee, stabiliser, acidity regulator and optional ingredients.
- Thermal treatment UHT and homogenisation of the mixture. The pressure during the treatment is 150 (+/- 50) bars at a temperature between 137°C and 148°C C for 3 to 10 seconds. The heat treatment (UHT process) can be direct or indirect (known in the state of the art).

The final product is packaged and stored, preferably in the bottle, object of the present invention: Beverage based on coffee with milk.

Thanks to the described obtainment process, the packaged final product does not require cold for its conservation.

The organoleptic characteristics of the final product are: coffee beverage ready to consume, creamy, refreshing and soft in all its aspects.

### DESCRIPTION OF THE FIGURES

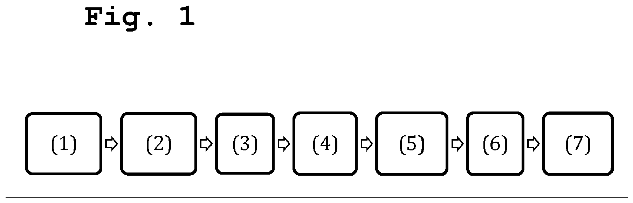

- Figure 1: Flow chart of the method for producing the beverage based on coffee with milk object of the present invention.

### PREFERRED EMBODIMENT OF THE INVENTION

The components of the recipe corresponding to three varieties of the beverage based on coffee with milk object of the present invention are detailed below. All this must be considered in a general and non-limiting sense.

The ingredients of the recipe to obtain the first alternative, alternative of coffee with milk, of the beverage object of the present invention are:
- Standardised milk at 2-3% by weight of fat content. Milk with or without lactose can be used.
- Lactase, if the option of milk without lactose is used.
- Water
- White sugar (or sweeteners for low calorie product line).
- 100% lyophilised Arabica soluble coffee.
- Stabiliser avicel 2159.
- Trisodium citrate (E-331) as acidity regulator of the final product,

The percentage content of each of the ingredients indicated above in the coffee-with-milk variety of the final product is:

| **Ingredients** | **Dose of ingredient measured in % by weight of the final product** |
|---|---|
| Standardised milk 2-3% F | 50-90% |
| Water | *by difference* |
| Sugar (or sweetener) | 0-10% |
| Soluble coffee | 0.5-3% |
| Stabiliser avicel 2159 | 0.05-0.6% |
| Trisodium citrate | 0.05-0.6% |
| Lactase (if milk without lactose is used) | 0.3-2% |
| TOTAL | 100% |

The ingredients of the recipe to obtain the second alternative, alternative of decaffeinated coffee, of the beverage object of the present invention are the same as the previous alternative, and with the same doses or percentage content, but using 100% decaffeinated lyophilised Arabica soluble coffee (also with 0.5% to 3%).

The ingredients of the recipe to obtain the third alternative, alternative of cappuccino, of the beverage object of the present invention are the same as any of the first or second alternatives but adding between 0.05% and 0.6% by weight of cocoa as an additional ingredient.

Figure 1 shows the flowchart of a method for producing the beverage of any of the alternatives described above with the steps of: milk collection (1), thermisation and skimming (2) of the milk, fat standardisation (3), addition of the remaining ingredients (4), heat treatment UHT and homogenisation (5), packaging (6) of the product and storage (7) of the product.

## Claims

1. Beverage based on coffee with milk of the type that the final packaged product does not require refrigeration for its conservation, of the type comprising the following ingredients: milk, water, sugar or sweetener, soluble coffee, stabiliser and acidity regulator, **characterised in that** the milk is standardised with a weight content of between 2% and 3% fat and said coffee is soluble.

2. Beverage according to claim 1 **characterised in that** it comprises for every 100 units of weight of said beverage: between 50 and 90 units of standardised milk, a maximum of 10 units of sugar or sweetener, between 0.05 and 0.6 units of stabiliser, and between 0.05 and 0.6 units of acidity regulator.

3. Beverage according to any of the preceding claims **characterised in that** said stabiliser is Avicel 2159 and said acidity regulator is trisodium citrate.

4. Beverage according to any of the preceding claims **characterised in that** it comprises for each approximately 100 units of weight of said beverage between 0.5 and 3 units of 100% lyophilised Arabica soluble coffee.

5. Beverage according to the preceding claim **characterised in that** said coffee is of the decaffeinated type.

6. Beverage according to any of claims 4 or 5 **characterised in that** it also comprises an additional ingredient as a cocoa-based ingredient.

7. Beverage according to any of the preceding claims **characterised in that** it comprises for each approximately 100 units of weight of said beverage between 0.3 and 2 units of lactase.

8. Method for producing a beverage based on coffee with milk **characterised in that** it comprises the following steps:
- Collection of milk (1),
- thermisation and skimming of milk (2) in a temperature range of 72°C to 76°C, for between 15 and 20 seconds,
- standardisation of fat content up to 2% to 3% in fat content (3),
- addition of ingredients (4) of any of the preceding claims, and in the proportions of any of the preceding claims, and
- thermal treatment UHT and homogenisation of the mixture (5) at 150 (+/- 50) bars at a temperature between 137°C and 148°C for 3 to 10 seconds.

9. Method according to the preceding claim **characterised by** carrying out an enzymatic hydrolysis of the standardised milk until its lactose content is removed.
